(19) Europäisches Patentamt
European Patent Office
Office européen des brevets

(11) **EP 2 630 013 B1**

(12) **EUROPÄISCHE PATENTSCHRIFT**

(45) Veröffentlichungstag und Bekanntmachung des Hinweises auf die Patenterteilung:
**18.03.2015   Patentblatt 2015/12**

(21) Anmeldenummer: **11770434.6**

(22) Anmeldetag: **17.10.2011**

(51) Int Cl.:
**B60T 8/17** *(2006.01)*        **B60T 8/32** *(2006.01)*

(86) Internationale Anmeldenummer:
**PCT/EP2011/068067**

(87) Internationale Veröffentlichungsnummer:
**WO 2012/052381 (26.04.2012 Gazette 2012/17)**

(54) **VERFAHREN ZUR STEUERUNG EINER GLEITSCHUTZGEREGELTEN REIBUNGSBREMSANLAGE EINES SCHIENENFAHRZEUGS**

METHOD FOR CONTROLLING AN ANTISLIP-REGULATED FRICTION BRAKE SYSTEM OF A RAIL VEHICLE

PROCÉDÉ DE COMMANDE D'UN SYSTÈME DE FREINS À FRICTION À RÉGULATION ANTIPATINAGE D'UN VÉHICULE SUR RAIL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.10.2010   DE 102010049303**

(43) Veröffentlichungstag der Anmeldung:
**28.08.2013   Patentblatt 2013/35**

(73) Patentinhaber: **KNORR-BREMSE Systeme für Schienenfahrzeuge GmbH 80809 München (DE)**

(72) Erfinder:
• **HERDEN, Marc-Oliver 81377 München (DE)**
• **ENGLBRECHT, Matthaeus 81249 München (DE)**
• **TRINKBERGER, Andreas 82024 Taufkirchen (DE)**

(56) Entgegenhaltungen:
**DE-A1-102008 063 892     FR-A- 1 001 691 GB-A- 2 402 983**

**Beschreibung**

Stand der Technik

Die Erfindung geht aus einem Verfahren zur Steuerung einer gleitschutzgeregelten Reibungsbremsanlage eines Schienenfahrzeugs oder eines aus mehreren Schienenfahrzeugen bestehenden Schienenfahrzeugzuges, welches oder welcher eine Anzahl von gebremsten Achsen aufweist, gemäß Anspruch 1 sowie von einer nach diesem Verfahren gesteuerten Reibungsbremsanlage gemäß Anspruch 4.

Bei Schienenfahrzeugen erfolgt die Übertragung von Brems- und Beschleunigungskräften am Rad/Schiene-Kontaktpunkt. Dort erfolgt die Übertragung durch Reibschluss mittels zwischen aus Stahl bestehenden Bauteilen wirkenden Bremsreibungskräften. Die Reibungsverhältnisse dieses Reibschlusses sind unter anderem von der Temperatur, dem Verschmutzungsgrad und der Geschwindigkeit abhängig. Dabei kann es passieren, dass während einer Bremsung die Bremskraft größer eingestellt wird als die am Aufstandspunkt maximal übertragbare Bremsreibungskraft, was dazu führt, dass die Räder einer oder mehrerer Achsen blockieren. In solchen Fällen kommt es durch die dann einsetzende Gleitreibung zu einer unerwünschten Flachstellenbildung sowie zu einer Reduzierung der übertragbaren Bremsreibungskräfte, weil der Reibungskoeffizient ausgehend von einem Maximum bei sehr geringer Relativgeschwindigkeit mit größerer Relativgeschwindigkeit zwischen den Reibpartnern sinkt. Um dies zu verhindern, werden sogenannte Gleitschutzsysteme oder Gleitschutzregelsysteme verwendet, durch welche im Falle eines Bremsblockierens die Bremskraft an der betroffenen Achse reduziert wird, um wieder annähernd in den Bereich der Haftreibung bzw. eines optimalen Bremsschlupfes zu gelangen.

Diese durch die Gleitschutzregelung vorgenommene Reduzierung der Bremskräfte an bremsblockierenden Achsen führt dazu, dass die gewünschte Verzögerung des Schienenfahrzeugs bzw. Schienenfahrzeugzuges nicht erreicht wird bzw. es zu einer Bremswegverlängerung kommt. Solches gilt es zu vermeiden.

Aus der DE 10 2008 063 892 A1 ist ein Verfahren bekannt, bei dem Schwankungen der Reibbedingungen zwischen Rad oder Radsatz und Schiene ab einem gewissen Grenzwert durch Anpassung der Bremskraft bzw. des Bremsmoments kompensiert werden. Insbesondere wird bei mehreren Bremsaktuatoren, wenn bei einem Bremsaktuator eine unerlaubte Abweichung einer die Reibbedingungen zwischen Rad und Schiene repräsentierenden Größe festgestellt wird, die Bremskraft an dem einen Bremsaktuator vergrößert und zur Kompensation die durch einen weiteren Bremsaktuator, bei welchem eine erlaubte oder keine Abweichung der die Reibbedingungen zwischen Rad und Schiene repräsentierenden Größe vorliegt, erzeugte Bremskraft reduziert.

Aufgabe

Der vorliegenden Erfindung liegt die Aufgabe zugrunde, ein Verfahren und eine Reibungsbremsanlage der eingangs erwähnten Art derart weiter zu entwickeln, dass sich bei einem Bremsvorgang eine höhere Verzögerung ergibt.

Diese Aufgabe wird erfindungsgemäß durch die Merkmale von Anspruch 1 und Anspruch 4 gelöst.

Offenbarung der Erfindung

Das Verfahren gemäß der Erfindung sieht wenigstens folgende Schritte vor:

a) Beaufschlagen von wenigstens zwei ausgewählten Achsen der Anzahl von Achsen während einer Bremsung mit einem Bremsdruck, welcher einen der Bremsanforderung der Bremsung entsprechenden Bremsdruck übersteigt,

b) Messung wenigstens einer die jeweils maximal übertragbare Bremsreibungskraft zwischen den Rädern der ausgewählten Achsen und der Schiene repräsentierenden Größe wie Raddrehgeschwindigkeit, Radumfangsbeschleunigung, Bremskraft, Bremsmoment oder Bremsdruck,

c) Erstellen einer Liste, in welcher die ausgewählten Achsen ihrer jeweils übertragbaren Bremsreibungskraft zugeordnet sind,

d) Identifizieren von wenigstens einer bremsschlupfenden Achse der ausgewählten Achsen, bei welcher während der Bremsung ein ein vorgegebenes Maß überschreitender Bremsschlupf auftritt und deshalb die Gleitschutzregelung aktiviert wird,

e) Berechnen einer verlorenen Bremsarbeit an der wenigstens einen bremsschlupfenden Achse aus der Differenz zwischen der Bremsarbeit, welche ohne Aktivierung der Gleitschutzregelung an dieser wenigstens einen bremsschlupfenden Achse geleistet worden wäre und der tatsächlich geleisteten Bremsarbeit an dieser wenigstens einen bremsschlupfenden Achse,

f) Identifizieren wenigstens einer nicht oder in zulässigem Maße bremsschlupfenden Achse aus der Liste, durch welche eine größere Reibungskraft übertragbar ist als durch die bremsschlupfende Achse,

g) Zuspannen der Bremsen an der wenigstens einen, nicht oder in zulässigem Maße bremsschlupfenden Achse derart, dass die an der wenigstens einen bremsschlupfenden Achse verlorenen Bremsarbeit zumindest teilweise kompensiert wird.

Die Erfindung betrifft auch eine Vorrichtung zur Ausführung des Verfahrens, wobei hierzu bevorzugt bereits vorhandene hardware genutzt wird wie beispielsweise das Bremssteuergerät und Raddrehzahlsensoren.

Mit anderen Worten besteht der grundsätzliche Erfindungsgedanke darin, dass durch eine Druckerhöhung an nicht oder in erlaubtem Maße bremsschlupfenden (bremsgleitenden) Achsen die an übermäßig bremsschlupfenden Achsen verlorene Bremsenergie kompensiert wird.

Zunächst werden die aktuellen Reibbedingungen zwischen wenigstens einer Gruppe von gebremsten Achsen (hier: ausgewählte Achsen) und der Schiene ermittelt. Dazu werden während einer Bremsung die ausgewählten Achsen zusätzlich mit über die Bremsanforderung hinaus gehendem Bremsdruck beaufschlagt, um bevorzugt anhand der Raddrehzahlsignale der betreffenden Achsen Informationen über die Reibungsverhältnisse und damit über die jeweils übertragbare Bremsreibungskraft zwischen den Rädern der betreffenden ausgewählten Achsen und der Schiene zu gewinnen.

Da die meisten Bremsungen ohne Bremsblockieren vonstatten gehen und es deshalb schwierig ist, Aussagen darüber zu treffen, welche Bremsreibungskräfte die ausgewählten Achsen übertragen können, ist es günstig, die ausgewählten Achsen mit einer gemessen an der gemäß Bremsanforderung notwendigen Bremskraft höheren Bremskraft abzubremsen, um die Achsen näher an die Bremsschlupfgrenze zu gelangen bzw. diese geringfügig zu überschreiten. Erst dann lassen sich zuverlässige Aussagen über die Reibungsverhältnisse bzw. über die übertragbaren Bremsreibkräfte zwischen den ausgewählten Achsen und der Schiene treffen, weil einige dieser Achsen z.B. aufgrund unterschiedlicher lokaler Reibbedingungen entlang des Schienenfahrzeugs oder Schienenfahrzeugzuges eher zum Bremsblockieren neigen als andere. Die dann höhere bzw. niedrigere Bremsreibungskräfte übertragbaren Achsen gilt es dann zu identifizieren.

Diese Beurteilung erfolgt durch Messung wenigstens einer die maximal übertragbare Bremsreibungskraft oder die Reibungsverhältnisse zwischen den ausgewählten Achsen und der Schiene repräsentierenden Größe wie Raddrehgeschwindigkeit, Radumfangsbeschleunigung, Bremskraft, Bremsmoment oder Bremsdruck.

Dadurch wird eine Art Profil der an den ausgewählten Achsen während der (mit gegenüber der Bremsanforderung höherer Bremskraft durchgeführter) Bremsung vorliegenden Bremsreibungsverhältnisse ermittelt und in einer Liste oder in einem Speicher abgelegt oder auch zwischengespeichert, in welcher oder in welchem jeder ausgewählten Achse die sich im Laufe der gerade vorliegenden Bremsung ergebenen Bremsreibungsbedingungen wie die übertragene Bremsreibungskraft zugeordnet sind.

Im Gegensatz zum Stand der Technik, bei welchem eine Gleitschutzregelung nur jeweils im Rahmen eines einzelnen Schienenfahrzeugs realisiert ist und ein diesbezüglicher Datenaustausch unter einzelnen Schienenfahrzeugen eines Schienenfahrzeugzuges lediglich die Raddrehzahlen zur Referenzgeschwindigkeitsbildung betrifft, wird der Datenaustausch oder Datenfluss im Rahmen der Erfindung dahingehend erweitert, dass nun Daten über aufgrund ungünstiger Bremsreibungsverhältnisse bremsschlupfender Achsen sowie über nicht bremsschlupfende oder noch vom Bremsschlupf entfernt abgebremste und damit zur Kompensation zur Verfügung stehende Achsen in einem Schienenfahrzeugzug, d.h. zugweit kommuniziert werden.

Danach wird die Bremskraftverteilung unter den ausgewählten Achsen abhängig von dem zuvor gespeicherten Profil der Bremsreibungsverhältnisse durchgeführt. Sollte während der vorliegenden Bremsung an einer oder mehreren ausgewählten Achsen aufgrund eines Eingriffs der Gleitschutzregelung die gemäß Bremskraftanforderung eigentlich angeforderte Bremskraft reduziert werden müssen, so wird beispielsweise mittels des vorliegenden Bremssollwerts, des Bremsdrucks, der Achsgeschwindigkeit und der Verzögerung/Zeit bevorzugt die durch die Bremskraftreduzierung verlorene Bremsarbeit an den betreffenden bremsschlupfenden Achsen berechnet.

Diese verlorene Bremsarbeit wird dann entweder unmittelbar oder aber zu einem späteren Zeitpunkt, d.h. nach Ablauf einer bestimmten Zeitdauer, aber noch während derselben Bremsung durch eine entsprechende Erhöhung der Bremsarbeit an anderen, der gespeicherten Liste oder dem gespeicherten Profil gemäß nicht oder in erlaubtem Maße bremsschlupfenden Achsen kompensiert.

Da die insgesamt zur Verfügung stehenden Bremskräfte werden folglich abhängig von den an den betreffenden Achsen vorliegenden Bremsreibungsverhältnisse auf die Achsen verteilt, so dass hieraus eine größere Verzögerung des Schienenfahrzeugs oder des Schienenfahrzeugzuges erzielt werden kann.

Durch die in den Unteransprüchen aufgeführten Maßnahmen sind vorteilhafte Weiterbildungen und Verbesserungen der in Anspruch 1 angegebenen Erfindung möglich.

Gemäß einer besonders zu bevorzugenden Ausführungsform die Kompensation der an der wenigstens einen bremsschlupfenden Achse verlorenen Bremsarbeit während der Bremsung unmittelbar nach dem Schritt f) von Anspruch 1 oder noch während der Bremsung, aber um eine vorbestimmte Zeitdauer nach dem Schritt f) erfolgt.

Genaueres geht aus der folgenden Beschreibung eines Ausführungsbeispiels hervor.

Beschreibung des Ausführungsbeispiels

Eine gleitschutzgeregelte Reibungsbremsanlage eines aus mehreren einzelnen Schienenfahrzeugen bestehenden Schienenfahrzeugzuges weist eine Anzahl von gebremsten und gleitschutzgeregelten Achsen (Radsätze) auf. Bei der Bremsanlage kann es sich beispielsweise um eine direkt wirkende oder um eine indirekt wirkende elektropneumatische Reibungsbremse, wobei der Bremsdruck auf Bremszylinder wirkt, welche bevorzugt Bremsbeläge in Reibkontakt mit mit den Achsen drehenden Bremsscheiben bringen. Die Achsen sind Drehgestellen zugeordnet, vorzugsweise je Drehgestell zwei Achsen und je Schienenfahrzeug zwei Drehgestelle.

Die Gleitschutzeinrichtung verhindert das Blockieren der Radsätze beim Bremsen, wodurch Flachstellen an den Rädern vermieden werden können. Bevorzugt ist der Gleitschutz mikroprozessorgesteuert, wobei die Drehzahlen der Radsätze der einzelnen Schienenfahrzeuge durch Raddrehzahlsensoren erfasst werden. Hieraus berechnet der Mikroprozessor in einer Auswertelogik eine Ansteuerung von Gleitschutzventilen. Durch die Gleitschutzventile wird der Bremszylinderdruck je nach Bedarf vermindert, gehalten oder erhöht.

Die elektropneumatische Reibungsbremse wird von einem oder mehreren Bremssteuergeräten gesteuert. Raddrehzahlsensoren melden die Raddrehgeschwindigkeiten der Achsen an das Bremssteuergerät, in welches bevorzugt auch die Auswertelogik der Gleitschutzeinrichtung integriert ist.

Gemäß des hier vorgestellten Verfahrens, welches gemäß von bevorzugt in dem Bremssteuergerät gespeicherten Routinen durchgeführt wird, werden während einer Bremsung die Bremsaktuatoren an wenigstens zwei ausgewählten Achsen des Schienenfahrzeugzuges mittels Ansteuerung durch das Bremssteuergerät mit einem Bremsdruck beaufschlagt werden, welcher einen der Bremsanforderung der Bremsung entsprechenden Bremsdruck übersteigt. Bevorzugt werden mehr als zwei Achsen ausgewählt, insbesondere alle gebremsten Achsen des Schienenfahrzeugzuges.

Dabei stellen die von den Raddrehzahlsensoren der ausgewählten Achsen gemessenen Raddrehzahlen bevorzugt eine die jeweils maximal übertragbare Reibungskraft zwischen den Radsätzen der ausgewählten Achsen und der Schiene repräsentierenden Größe dar. Alternativ kann jede jeweils maximal übertragbare Bremsreibungskraft zwischen den Rädern der ausgewählten Achsen und der Schiene repräsentierende Größe herangezogen werden wie beispielsweise die Radumfangsbeschleunigung, die Bremskraft, das Bremsmoment oder der Bremsdruck.

Beispielsweise wird aus den Raddrehzahlen der ausgewählten Achsen eine mittlere Raddrehzahl gebildet und die einzelnen Raddrehzahlen mit dieser mittleren Raddrehzahl verglichen, wobei eine wesentlich geringere individuelle Raddrehzahl auf einen hohen Bremsschlupf des betreffenden Radsatzes und somit auf einen Reibschluss im Bereich der Gleitreibung hinweist und eine etwas höhere Raddrehzahl bzw. eine der mittleren Raddrehzahl entsprechende individuelle Raddrehzahl auf einen geringen Bremsschlupf und somit auf einen Reibschluss im Bereich der Haftreibung. Reibschlüsse im Bereich der Gleitreibung deuten auf eine relativ geringe übertragbare Reibungskraft und solche im Bereich der Haftreibung auf eine relativ hohe Reibungskraft der betreffenden Achse hin. In diesem Sinne werden die Raddrehzahlen der ausgewählten Achsen zur Auswertung an das elektronische Bremssteuergerät übermittelt.

Innerhalb des Bremssteuergeräts ist ein Speicher vorhanden, zum Speichern einer Liste, in welcher die ausgewählten Achsen dann ihrer jeweils übertragbaren Reibungskraft (hoch oder niedrig) zugeordnet sind.

Die Auswertelogik innerhalb des Bremssteuergeräts ist ausgebildet, um aus der Liste die bremsschlupfenden Achsen zu identifizieren, bei welchen während der vorliegenden Bremsung ein ein vorgegebenes Maß überschreitender Bremsschlupf auftritt und deshalb die Gleitschutzregelung aktiviert werden muss.

Weiterhin sind in dem Bremssteuergerät Berechnungsroutinen integriert, zum Berechnen einer verlorenen Bremsarbeit an den stark bremsschlupfenden Achsen. Die Bremsarbeit $W_b$ ist die Arbeit, die beim Bremsvorgang aufgebracht werden muss:

$$W_b = F_b \cdot s_b$$

wobei:

$W_b$ = Bremsarbeit    in Nm,
$F_b$ = Bremskraft    in N,
$S_b$ = Bremsweg    in m.

Bremsarbeit bedeutet negative Beschleunigungsarbeit und Abbau kinetischer Energie.

Die verlorene Bremsarbeit wird als Differenz zwischen der Bremsarbeit, welche ohne Aktivierung der Gleitschutzregelung an den bremsschlupfenden Achsen geleistet worden wäre und der tatsächlich geleisteten (geringeren) Bremsarbeit an diesen Achsen berechnet.

Gleichzeitig identifiziert das Bremssteuergerät wenigstens eine nicht oder in zulässigem oder geringem Maße bremsschlupfende Achse aus der Liste, durch welche größere Bremsreibungskräfte übertragbar ist als durch die bremsschlupfenden Achsen.

Sodann werden die Bremsaktuatoren an der wenigstens einen, nicht oder in zulässigem oder geringen Maße bremsschlupfenden Achsen während der vorliegenden Bremsung mittels des Bremssteuergeräts derart zugespannt, dass die an den bremsschlupfenden Achsen verlorene Bremsarbeit zumindest teilweise und bevorzugt vollständig kompensiert wird.

Diese verlorene Bremsarbeit wird bevorzugt unmittelbar oder aber zu einem späteren Zeitpunkt, d.h. nach Ablauf einer bestimmten Zeitdauer, aber noch während derselben Bremsung durch eine entsprechende Erhöhung der Bremsarbeit an den anderen, der gespeicherten Liste oder dem gespeicherten Profil gemäß nicht oder in erlaubtem oder in geringem Maße bremsschlupfenden Achsen kompensiert.

Da die insgesamt zur Verfügung stehenden Bremskräfte werden folglich abhängig von den an den betreffenden Achsen vorliegenden Reibungsverhältnisse auf die Achsen verteilt, so dass hieraus eine größere Verzögerung des Schienenfahrzeugs oder des Schienenfahrzeugzuges erzielt werden kann.

Anstatt der Bremsarbeit als Maß für die geringere oder höhere Bremswirkung an den ausgewählten Achsen kann jede die Bremsarbeit repräsentierende Größe herangezogen werden. Weiterhin kann das Verfahren auch lediglich an einem einzelnen Schienenfahrzeugs mit mehreren Achsen in der oben beschriebenen Weise durchgeführt werden, wobei in diesem Fall bremsschlupfbedingt geringere Bremsreibungskräfte an den Achsen eines Drehgestells dann beispielsweise durch eine Erhöhung der Bremskräfte an den Achsen des weiteren Drehgestells kompensiert werden.

## Patentansprüche

1. Verfahren zur Steuerung einer gleitschutzgeregelten Reibungsbremsanlage eines Schienenfahrzeugs oder eines aus mehreren Schienenfahrzeugen bestehenden Schienenfahrzeugzuges, welches oder welcher eine Anzahl von gebremsten Achsen aufweist, **gekennzeichnet durch** folgende Schritte:

   a) Beaufschlagen von wenigstens zwei ausgewählten Achsen der Anzahl von gebremsten Achsen während einer Bremsung mit einem Bremsdruck, welcher einen der Bremsanforderung der Bremsung entsprechenden Bremsdruck übersteigt,
   b) Messung wenigstens einer die jeweils maximal übertragbare Reibungskraft zwischen den Rädern der ausgewählten Achsen und der Schiene repräsentierenden Größe wie Raddrehgeschwindigkeit, Radumfangsbeschleunigung, Bremskraft, Bremsmoment oder Bremsdruck,
   c) Erstellen einer Liste, in welcher die ausgewählten Achsen ihrer jeweils übertragbaren Bremsreibungskraft zugeordnet sind,
   d) Identifizieren von wenigstens einer bremsschlupfenden Achse der ausgewählten Achsen, bei welcher während der Bremsung ein ein vorgegebenes Maß überschreitender Bremsschlupf auftritt und deshalb die Gleitschutzregelung aktiviert wird,
   e) Berechnen einer verlorenen Bremsarbeit an der wenigstens einen bremsschlupfenden Achse aus der Differenz zwischen der Bremsarbeit, welche ohne Aktivierung der Gleitschutzregelung an dieser wenigstens einen bremsschlupfenden Achse geleistet worden wäre und der tatsächlich geleisteten Bremsarbeit an dieser wenigstens einen bremsschlupfenden Achse,
   f) Identifizieren wenigstens einer nicht oder in zulässigem Maße bremsschlupfenden Achse aus der Liste, **durch** welche eine größere Reibungskraft übertragbar ist als **durch** die bremsschlupfende Achse,
   g) Zuspannen der Bremsen an der wenigstens einen, nicht oder in zulässigem Maße bremsschlupfenden Achse derart, dass die an der wenigstens einen bremsschlupfenden Achse verlorene Bremsarbeit zumindest teilweise kompensiert wird.

2. Verfahren nach Anspruch 1, **dadurch gekennzeichnet, dass** die Kompensation der an der wenigstens einen bremsschlupfenden Achse verlorenen Bremsarbeit während der Bremsung unmittelbar nach dem Schritt f) oder noch während der Bremsung, aber um eine vorbestimmte Zeitdauer nach dem Schritt f) erfolgt.

3. Verfahren nach einem der vorhergehenden Ansprüche, **dadurch gekennzeichnet, dass** eine die Bremsarbeit repräsentierende Größe zur Berechnung herangezogen wird.

4. Reibungsbremsanlage eines Schienenfahrzeugs oder eines aus mehreren Schienenfahrzeugen bestehenden Schienenfahrzeugzuges welches oder welcher eine Anzahl von gebremsten Achsen aufweist, **gekennzeichnet durch**:

   a) Bremsaktuatoren an wenigstens zwei ausgewählten Achsen der Anzahl von gebremsten Achsen, welche während einer Bremsung mittels eines Steuergeräts mit einem Bremsdruck beaufschlagt werden, welcher einen der Bremsanforderung der Bremsung entsprechenden Bremsdruck übersteigt,
   b) Sensoren zur Messung wenigstens einer die jeweils maximal übertragbare Reibungskraft zwischen den Rädern der ausgewählten Achsen und der Schiene repräsentierenden Größe wie Raddrehgeschwindigkeit, Radumfangsbeschleunigung, Bremskraft, Bremsmoment oder Bremsdruck und zur Übermittlung der Größe an ein elektronisches Steuergerät,
   c) Speichermittel innerhalb des Steuergeräts zum Speichern einer Liste, in welcher die ausgewählten Achsen ihrer jeweils übertragbaren Reibungskraft zugeordnet sind,
   d) Identifikationsmittel innerhalb des Steuergeräts zum Identifizieren von wenigstens einer bremsschlupfenden Achse der ausgewählten Achsen, bei welcher während der Bremsung ein ein vorgegebenes Maß überschreitender Bremsschlupf auftritt und deshalb die Gleitschutzregelung aktiviert wird,
   e) Berechnungsmittel innerhalb des Steuergeräts zum Berechnen einer verlorenen Bremsarbeit an der wenigstens einen bremsschlupfenden Achse aus der Differenz zwischen der Bremsarbeit, welche ohne Aktivierung der Gleitschutzregelung an dieser wenigstens einen bremsschlupfenden Achse geleistet worden wäre und der tatsächlich geleisteten Bremsarbeit an dieser wenigstens einen bremsschlupfenden Achse,

f) Identifikationsmittel innerhalb des Steuergeräts zum Identifizieren wenigstens einer nicht oder in zulässigem Maße bremsschlupfenden Achse aus der Liste, **durch** welche eine größere Reibungskraft übertragbar ist als **durch** die bremsschlupfende Achse,

g) Bremsaktuatoren an der wenigstens einen, nicht oder in zulässigem Maße bremsschlupfenden Achse, welche während der Bremsung mittels des Steuergeräts derart zugespannt werden, dass die an der wenigstens einen bremsschlupfenden Achse verlorene Bremsarbeit zumindest teilweise kompensiert wird.

5. Reibungsbremsanlage nach Anspruch 4, **dadurch gekennzeichnet, dass** das Steuergerät ausgebildet ist, dass es eine die Bremsarbeit repräsentierende Größe zur Berechnung heranzieht.

**Claims**

1. Method for controlling an antislip-regulated friction brake system of a rail vehicle or of a rail vehicle train which is composed of a plurality of rail vehicles and which has a number of braked axles, **characterized by** the following steps:

   a) subjecting at least two selected axles of the number of braked axles during braking to a braking pressure which exceeds a braking pressure corresponding to the braking request for the braking,

   b) measuring at least one variable representing the maximum transmittable frictional force in each case between the wheels of the selected axles and the rail, such as the wheel rotational speed, wheel circumferential acceleration, braking force, braking torque or braking pressure,

   c) preparing a list in which the selected axles are assigned to their respectively transmittable braking frictional force,

   d) identifying at least one axle with brake slip from the selected axles, at which axle, during braking, a brake slip which exceeds a predefined extent occurs and therefore the antislip regulation is activated,

   e) calculating lost braking work at the at least one axle with brake slip from the difference between the braking work which would have been carried out without activation of the antislip regulation at this at least one axle with brake slip and the braking work which is actually performed at this at least one axle with brake slip,

f) identifying from the list at least one axle without brake slip or with a permissible degree of brake slip and by means of which a greater frictional force can be transmitted than by the axle with brake slip,

g) applying the brakes at the at least one axle without brake slip or with a permissible degree of brake slip, in such a way that the braking work which is lost at the at least one axle with brake slip is at least partially compensated.

2. Method according to Claim 1, **characterized in that** the compensation of the braking work which is lost at the at least one axle with brake slip takes place during the braking immediately after the step f) or even during the braking, but a predetermined time period after the step f).

3. Method according to one of the preceding claims, **characterized in that** a variable representing the braking work is used for the calculation.

4. Friction brake system of a railway vehicle or of a rail vehicle train which is composed of a plurality of rail vehicles and which has a number of braked axles, **characterized by**:

   a) brake actuators on at least two selected axles of the number of braked axles which are subjected during braking by means of a control unit to a braking pressure which exceeds a braking pressure corresponding to the braking requirement for the braking,

   b) sensors for measuring at least one variable representing the maximum transmittable frictional force in each case between the wheels of the selected axles and the rail, such as the wheel rotational speed, wheel circumferential acceleration, braking force, braking torque or braking pressure, and for transferring the variable to an electronic control unit,

   c) storage means within the control unit for storing a list in which the selected axles are assigned to their respectively transmittable frictional force,

   d) identification means within the control unit for identifying at least one axle with brake slip from the selected axles at which, during braking, a brake slip which exceeds a predefined degree occurs and therefore the antislip regulation is activated,

   e) calculation means within the control unit for calculating lost braking work at the at least one axle with brake slip from the difference between the braking work which would have been carried out without activation of the antislip regulation at this at least one axle with brake slip and the actual braking work performed at this at least one axle with brake slip,

f) identification means within the control unit for identifying from the list at least one axle without brake slip or with a permissible degree of brake slip and by means of which a greater frictional force can be transmitted than by the axle with brake slip,

g) brake actuators at the at least one axle without brake slip or with a permissible degree of brake slip, which brake actuators are applied by means of the control unit during the braking, in such a way that the braking work which is lost at the at least one axle with brake slip is at least partially compensated.

5. Friction brake system according to Claim 4, **characterized in that** the control unit is designed to use a variable representing the braking work for the calculation.

**Revendications**

1. Procédé de commande d'un système de frein à friction à régulation antipatinage d'un véhicule sur rail ou d'un train de véhicules sur rail, qui est constitué de plusieurs véhicules sur rail ou qui a un certain nombre d'essieux freinés, **caractérisé par** les stades suivants :

   a) soumission d'au moins deux essieux sélectionnés parmi le nombre d'essieux freinés pendant un freinage à une pression de frein, qui dépasse une pression de frein correspondant à l'exigence de frein du freinage,
   b) mesure d'une grandeur, comme la vitesse de rotation d'une roue, l'accélération périphérique d'une roue, la force de frein, le couple de frein ou la pression de frein représentant la force de friction pouvant être transmise au maximum respectivement entre les roues des essieux sélectionnés et le rail,
   c) établissement d'une liste, dans laquelle les essieux sélectionnés sont associés à leurs forces de friction de frein pouvant être transmises respectivement,
   d) identification d'au moins un essieu d'anti-enrayage parmi les essieux sélectionnés, pour lequel, pendant le freinage, un glissement de frein dépassant une valeur donnée à l'avance se produit et dont la régulation d'antipatinage est, par conséquent, activée,
   e) calcul d'un travail de frein perdu sur le au moins un essieu d'anti-enrayage, à partir de la différence entre le travail de frein, qui aurait été fourni sans activation de la régulation d'antipatinage sur ce au moins un essieu d'anti-enrayage, et le travail de frein fourni réellement sur ce au moins un essieu d'anti-enrayage,

f) identification d'au moins un essieu de non anti-enrayage ou ne l'étant pas dans une mesure admissible dans la liste, par lequel peut être transmise une force de friction plus grande que par l'essieu d'anti-enrayage,

g) serrage des freins sur le au moins un essieu non anti-enrayage ou ne l'étant pas dans une mesure admissible, de manière à compenser, au moins en partie, le travail de frein perdu sur le au moins un essieu d'anti-enrayage.

2. Procédé suivant la revendication 1, **caractérisé en ce qu'**on effectue la compensation du travail de frein perdu sur le au moins un essieu d'anti-enrayage pendant le freinage, directement après le stade f), ou encore pendant le freinage, mais d'une durée déterminée à l'avance après le stade f).

3. Procédé suivant l'une des revendications précédentes, **caractérisé en ce qu'**on tire parti, pour le calcul, d'une grandeur représentant le travail de frein.

4. Système de frein à friction d'un véhicule sur rail ou d'un train de véhicules sur rail, qui est constitué de plusieurs véhicules sur rail ou qui a certain nombre d'essieux freinés, **caractérisé par** :

   a) des actionneurs de frein sur au moins deux essieux sélectionnés parmi le nombre d'essieux freinés, qui, pendant un freinage, sont soumis au moyen d'un appareil de commande à une pression de frein, qui dépasse une pression de frein correspondant à l'exigence de frein du freinage,
   b) des capteurs de mesure d'au moins une grandeur, comme la vitesse de rotation d'une roue, l'accélération périphérique d'une roue, la force de frein, le couple de frein ou la pression de frein, représentant la force de friction pouvant être transmise au maximum respectivement entre les roues des essieux sélectionnés et le rail, et de transmission de la grandeur à un appareil de commande électronique,
   c) des moyens de mémorisation au sein de l'appareil de commande pour mémoriser une liste, dans laquelle les essieux sélectionnés sont associés à leurs forces de friction pouvant être transmises respectivement,
   d) des moyens d'identification au sein de l'appareil de commande pour l'identification d'au moins un essieu d'anti-enrayage parmi les essieux sélectionnés, pour lequel, pendant le freinage, un glissement de frein dépassant une valeur donnée à l'avance se produit et dont la régulation d'antipatinage est, par conséquent, activée,

e) des moyens de calcul au sein de l'appareil de commande pour le calcul d'un travail de frein perdu sur le au moins un essieu d'anti-enrayage, à partir de la différence entre le travail de frein, qui aurait été fourni sans activation de la régulation d'antipatinage sur ce au moins un essieu d'anti-enrayage, et le travail de frein fourni réellement sur ce au moins un essieu d'anti-enrayage,

f) des moyens d'identification au sein de l'appareil de commande pour l'identification d'au moins un essieu de non anti-enrayage ou ne l'étant pas dans une mesure admissible dans la liste, par lequel peut être transmise une force de friction plus grande que par l'essieu d'anti-enrayage,

g) des actionneurs de frein sur le au moins un essieu qui n'est pas d'anti-enrayage ou qui ne l'est pas dans une mesure admissible et qui, pendant le freinage, est serré au moyen de l'appareil de commande, de manière à compenser, au moins en partie, le travail de frein perdu sur le au moins un essieu d'anti-enrayage.

5. Système de frein de friction suivant la revendication 4, **caractérisé en ce que** l'appareil de commande est constitué pour tirer parti, pour le calcul, d'une grandeur représentant le travail de frein.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008063892 A1